# EUROPÄISCHE PATENTSCHRIFT

(11) **EP 1 459 697 B1**
(45) Veröffentlichungstag und Bekanntmachung des Hinweises auf die Patenterteilung: **07.03.2007**
(21) Anmeldenummer: 04001495.3
(22) Anmeldetag: 23.01.2004
(51) Int. Cl.: A61C 5/06

(54) **Applikationsvorrichtung**
Applying device
Dispositif d'application

(30) Priorität: 20.03.2003 DE 10312454
(43) Veröffentlichungstag der Anmeldung: 22.09.2004
(73) Patentinhaber: Firma Ivoclar Vivadent AG, FL-9494 Schaan (LI)
(72) Erfinder: Galehr, Klaus, 6824 Schlins (AU); Müller, Frank, 6800 Feldkirch (AU); Todd, Joanna Claire, 6800 Feldkirch (AU); Neubert, Roland, 6806 Tosters (AU); Huwig, Alexander, FL 8810 Horgen (LI)
(74) Vertreter: Baronetzky, Klaus

(56) Entgegenhaltungen:
- US-A1- 2002 027 088

## Beschreibung

Die Erfindung betrifft eine Applikationsvorrichtung, gemäß dem Oberbegriff von Anspruch 1.

Eine derartige Applikationsvorrichtung ist beispielsweise aus der EP-A2 1 153 579 bekannt. Diese Applikationsvorrichtung weist einen Grundkörper auf, in dessen Aufnahmebereich eine Substanz aufgenommen ist. Nach Abnehmen einer Deckfolie liegt die Substanz offen und kann mit Hilfe eines Applikationselements entnommen werden.

Häufig ist es im Dentalbereich erforderlich, Substanzen aus zwei verschiedenen Bestandteilen zu verwenden, die je getrennt aufbewahrt werden müssen, bevor sie aufgetragen werden. Hierzu ist gemäß einer Ausführungsform der genannten Veröffentlichung die Ausgestaltung von zwei Kammern vorgesehen, die mit einer durchstoßbaren Folie abgedeckt sind. Eine ähnliche Lösung ist allerdings längst bekannt, beispielsweise aus der DE-PS 19 60 074.

Von den zu verwendenden Bestandteilen für die Substanz ist häufig eine flüssig oder zumindest viskos, und die andere pulverförmig. Für derartige Lösungen stellt die DE-OS 199 56 705 eine Verbesserung dar. Bei dieser Lösung ist ein Arbeitsende des Applikationselements mit eine Substanz versehen, die dann nach Eindrücken des Applikationselements von dem anderen Bestandteil zur Erzeugung der Substanz benetzbar ist. Diese Lösung ist geeignet, wenn der andere Bestandteil eine Flüssigkeit ist. Die aus der genannten Offenlegungsschrift bekannte Applikationsvorrichtung bedingt jedoch vergleichsweise hohe Werkzeugkosten, nachdem drei Kunststoff-Formteile separat hergestellt werden müssen. Zwei der drei Formteile lassen sich nicht hinterschneidungsfrei realisieren, so dass für die Werkzeuge auch Schieber verwendet werden müssen. Zwar fallen Werkzeugkosten lediglich einmalig an. Es wäre jedoch wünschenswert, für unterschiedliche Mengen von Substanzen unterschiedliche Applikationsvorrichtungen bereitzustellen. Aufgrund der hohen Werkzeugkosten wird bei der Lösung gemäß der DE-OS 199 56 705 auf lediglich eine - und zwar relativ große - Größe zurückgegriffen, was die Herstellung dieses Einmalproduktes vergleichsweise teuer macht und mehr Kunststoffmaterial erfordert als eigentlich nötig wäre.

Ferner ist die aus der DE 199 56 705 bekannte Applikationsvorrichtung im Grunde lediglich dann besonders gut handhabbar, wenn sie festgehalten wird. Ein Abstellen erfordert entweder einen speziellen Ständer, oder es besteht die Gefahr, dass eine Applikationsvorrichtung gemäß der genannten Offenlegungsschrift umkippt und damit die Flüssigkeit verloren geht, wenn die Applikationsvorrichtung einmal geöffnet ist.

Zwar könnte man unten am Boden dieser Applikationsvorrichtung einen umlaufenden Rand anbringen, um die Standfestigkeit zu erhöhen. Dies würde jedoch die Handhabung schlechter machen, und würde zudem die Verwendung von noch weiteren Kunststoffmassen erfordern.

Zur Handhabung sieht die Applikationsvorrichtung gemäß der EP-A2 1 153 579 eine seitliche Greifhandhabe vor. Auch diese Vorrichtung neigt jedoch zum Verschütten der dortigen Substanz, wenn sie auf einer Unterlage nach dem Öffnen der Deckfolie abgelegt wird.

US 2002/027088 offenbart eine Applikationsvorrichtung gemäß dem Oberbegriff des Anspruchs 1.

Vor dem Hintergrund dieser Probleme liegt der Erfindung die Aufgabe zu Grunde, eine Applikationsvorrichtung gemäß dem Oberbegriff von Anspruch 1 zu schaffen, die auch bei unterschiedlichen Dosierungsnotwendigkeiten preisgünstig zu fertigen ist, und deutlich verbessert ist, was die ergonomische Handhabung angeht.

Diese Aufgabe wird erfindungsgemäß durch Anspruch 1 gelöst. Vorteilhafte Weiterbildungen ergeben sich aus den Unteransprüchen.

Überraschend erlaubt es die erfindungsgemäße Applikationsvorrichtung, mit geringeren Werkzeugkosten eine dennoch verbesserte Handhabung zu gewährleisten. Die erfindungsgemäße Anordnung von zwei Aufnahmebereichen nebeneinander bietet zunächst die Möglichkeit einer vergrößerten Standfläche, so dass vom Prinzip her bereits die Standfläche vergrößert ist.

In vorteilhafter Ausgestaltung ist eine Grundplatte in Doppelfunktion als Standfläche mit einer signifkanten Größe und als Greifhandhabe ausgebildet. Besonders günstig ist es aber, dass einer der Aufnahmebereiche, der als der zweite Aufnahmebereich bezeichnet ist, eine für die Aufnahme des Arbeitsendes oder eines Teils des Arbeitsendes des Applikationselements geeignete Form hat. Das Applikationselement kann praktisch dort aufbewahrt werden und ist damit auch dann sicher und gut aufgenommen, wenn es bereits benetzt ist. Es lässt sich gemäß einem besonders günstigen Gesichtspunkt der vorliegenden Erfindung zusammen mit der Applikationsvorrichtung im Übrigen als Single-Dose-Einheit verwenden, wobei die Aufnahme in dem Aufnahmebereich es erlaubt, einen auf dem Arbeitsende aufgebrachten Bestandteil der Substanz geschützt zu lagern und bei Bedarf durch Eintauchen in eine Flüssigkeit in dem ersten Aufnahmebereich zu aktivieren.

Auch wenn das Applikationselement einen recht langen Schaft von beispielsweise etwas mehr als 10 cm aufweist, ist die erfindungsgemäße Applikationsvorrichtung noch standfest. In vorteilhafter Ausgestaltung der erfindungsgemäßen Applikationsvorrichtung ist ein Grundkörper vorgesehen, der einen Einsatz aufnimmt, in dem die Flüssigkeit eingebracht ist. Diese Lösung erlaubt es, bei Bedarf auch lediglich den Einsatz und das Applikationselement auszutauschen. Trotz des Charakters einer Single-Dose-Einheit ergibt sich damit die Möglichkeit, den Sockel und Grundkörper der Applikationsvorrichtung wiederzuverwenden.

Sowohl der erste Aufnahmebereich als auch der zweite Applikationsbereich können bei Bedarf auch wiederverschließbar ausgebildet sein. Der erste Applikationsbereich ist mit einer Abdeckfolie abgedeckt, und bei entsprechender Bestückung der Abdeckfolie mit einem klebrigen Rand lässt sich ein Wiederverschließen erzielen. Das Applikationselement weist bevorzugt eine Verdickung auf und durch die Passform gegenüber dem zweiten Aufnahmebereich lässt sich ein Verschließen und bei Bedarf sogar eine Abdichtung auch beim Wiedereinstecken erzielen.

Besonders günstig ist es, dass die erfindungsgemäße Applikationsvorrichtung trotz der vergleichsweise großen Standfläche einen kompakten Aufbau hat. Die Aufbewahrung zu Transportzwecken und zur Vorratshaltung kann ohne Weiteres beispielsweise in der Form erfolgen, dass auf den Griffbereich einer Applikationsvorrichtung die nächstfolgende Applikationsvorrichtung aufgestellt wird, so dass sie in einer Reihe angeordnet sind.

Besonders günstig ist es auch, dass der zweite Aufnahmebereich bei eingestecktem Applikationselement automatisch eine geschlossene Kammer bildet. Der zweite Bestandteil der Substanz kann auch eine flächig aufgebrachte, sogar auch eine nicht ganz feste Substanz sein, die auf dem Arbeitsende aufgebracht ist. Durch den Kammercharakter des zweiten Aufnahmebereichs bei eingestecktem Applikationselement besteht nicht die Gefahr, dass der Bestandteil austrocknet, auch wenn er länger dort verbleibt. Zudem wirken an dem Arbeitsende aufgebrachte Borsten oder dergleichen wie eine Art Abstandshalter, so dass der Aufnahmebereich selbst durch den Bestandteil der Substanz an dem Arbeitsende nicht verschmutzt.

Besonders günstig ist es auch, wenn der erste Aufnahmebereich etwas höher als der zweite Aufnahmebereich angeordnet ist. Dies ermöglicht es dem Zahnarzt oder Zahntechniker, praktisch blind das Applikationselement in die Flüssigkeit einzutauchen, denn deren Aufnahmebereich ist erhaben, während bereits auf Grund der Höhenabstufung der zweite Aufnahmebereich sekundär wirkt und hierdurch auf der Hand liegt, dass er zur Aufbewahrung des Applikationselements dient.

Durch die Ausgestaltung des ersten Aufnahmebereichs mit einem Höhen/Durchmesser-Verhältnis von etwa 2:1 ist zum Einen die Neigung zum Verschütten geringer. Zum Anderen lassen sich auch ohne Weiteres Radien unterbringen, und zwar Innenradien unten und Außenradien am Mündungsbereich. Die harmonische Formgebung erlaubt es auch, die verwendete Flüssigkeit vollständig auszunutzen.

Auch können die Aufnahmebereiche in einer ergonomisch günstigen räumlichen Anordnung zueinander vorgesehen sein. Eine Kompaktanordnung des Sockels bietet dennoch die Möglichkeit, einen Abstand von beispielsweise etwa dem Durchmesser des ersten Aufnahmebereichs zwischen den Aufnahmebereichen vorzusehen. Durch die gleichförmige Ausrichtung mit zueinander parallelen Mittellängsachsen beider Aufnahmebereiche lässt sich das Applikationselement in gleicher Weise und mit der gleichen Handbewegung sowohl in den ersten als auch in den zweiten Aufnahmebereich einstecken. Durch die unterschiedliche Höhenlage merkt der Zahnarzt oder Zahntechniker auch bei Blindbedienung, in welchen Aufnahmebereich er das Applikationselement eingesteckt hat.

Die genannte Ausgestaltung des ersten Aufnahmebereichs mit dem Höhen/Durchmesser-Verhältnis von 2:1, das aber auch beispielsweise 1,5:1 oder 2,5:1 betragen kann, ist das Applikationselement auch in dem ersten Aufnahmebereich standfest. Besonders günstig in ergonimischer Sicht ist es, wenn der erste Aufnahmebereich zentral angebracht ist. Die Grundplatte überragt dann den Sockel an der dem zweiten Aufnahmebereich gegenüberliegenden Seite des ersten Aufnahmebereichs. Durch die zentrale Anordnung ist die Applikationsvorrichtung am besten in jede Richtung abgestützt, wenn das Applikationselement schief bei Blindbetätigung eingebracht wird.

Auch die Abreißlasche der Abdeckfolie kann bevorzugt zum Griffbereich hin vorspringen, da dann die Betätigung am einfachsten ist. Für die Abdeckfolie wird bevorzugt eine Reißfestigkeit verwendet, die die Größe der Klebekraft der Schweiß- oder Klebenaht deutlich übersteigt. Besonders bevorzugt ist es, wenn eine Klebenaht auf einem Einsatz den ersten Aufnahmebereich ringsum umgebend ausgebildet ist, da dann um Einen eine luftdichte Lagerung möglich ist, zum Anderen bei Verwendung entsprechender Klebstoffe auch ein Wiederverschließen möglich ist. Es versteht sich, dass als Klebstoff eine Substanz eingesetzt wird, die zu der Flüssigkeit kompatibel ist.

Es versteht sich, dass die erfindungsgemäße Applikationsvorrichtugn für beliebige Substanzen verwendet werden kann. Als Flüssigkeit kann beispielsweise ein Ethanol-Wasser-Gemisch oder aber beispielsweise ein Lösungsmittel eingesetzt werden, während das Arbeitsende des Applikationselementes mit einem beliebigen geeigneten Reaktions-Bestandteil beschichtet sein kann, der dann aktiviert oder flüssig wird, wenn das Applikationselement in die Flüssigkeit eingetaucht wird.

Es versteht sich, dass anstelle einer Flüssigkeit ohne Weiteres auch eine viskose Masse oder beispielsweise ein schüttfähiges Pulver eingesetzt werden können. Besonders günstig ist es, wenn die Abdeckfolie eine vergleichsweise hohe Reißfestigkeit hat. Dies verhindert zum Einen, dass sie sich beim Zug an der Lasche versehentlich teilt, zum Anderen aber vor allem, dass auf Grund einer Fehlbedienung das Arbeitsende die Folie durchstößt, denn in diesem Falle würde ein Teil des auf dem Arbeitsende aufgebrachten Bestandteils der Substanz an der Folie hängen bleiben und das Mischungsverhältnis wäre anders als erwünscht.

Weitere Vorteile, Einzelheiten und Merkmale sind aus der nachstehenden Beschreibung eines Ausführungsbeispiels anhand der Zeichnungen ersichtlich.

Es zeigen:
- Fig. 1: eine perspektivische schematische Ansicht eines Ausführungsbeispiels einer Ausführungsform einer erfindungsgemäßen Applikationsvorrichtung; und
- Fig. 2: einen Schnitt durch die Ausführungsform gemäß Fig. 1.

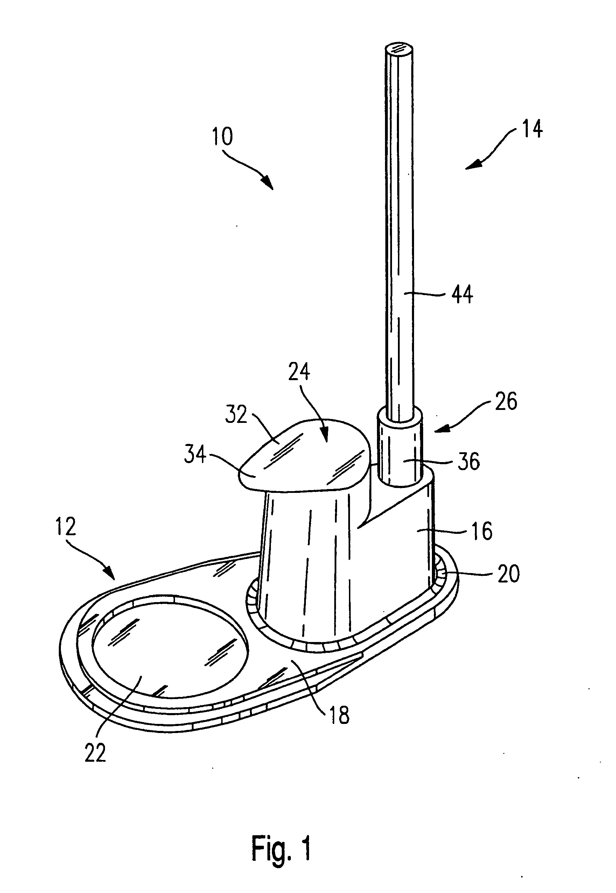

In Fig. 1 ist eine Ausführungsform einer Applikationsvorrichtung 10 ersichtlich, die im Wesentlichen aus einem Grundkörper 12 und einem Applikationselement 14 besteht. Der Grundkörper 12 weist einen Sockel 16 auf, der von einer Grundplatte 18 vorspringt. Im Übergangsbereich zwischen Sockel 16 und Grundplatte 18 ist eine Hohlkehle als Auffangrinne 20 ausgebildet, die der Aufnahme etwaiger verschütteter Reste der Substanz bildet.

Die Grundplatte 18 ist in dem dargestellten Ausführungsbeispiel leicht asymmetrisch ausgebildet. Der Sockel 16 ist in ihrer hinteren Hälfte angebracht und von einem Rand der Grundplatte 18 umgeben, der eine vergleichsweise geringe Breite von beispielsweise 2 bis 10 mm aufweist. Demgegenüber ist die vordere Hälfte deutlich verbreitert. Sie weist eine in dem dargestellten Ausführungsbeispiel kreisrunde Vertiefung als Griffbereich 22 auf. Die vordere Hälfte bildet bezogen auf den Sockel 16 einen Vorsprung und erstreckt sich im Wesentlichen halbkreisförmig, weist also eine etwa eine gleiche Breite wie Tiefe auf.

Diese Ausgestaltung erlaubt es, den für die Handhabung an engen Stellen, beispielsweise in der Nähe des Mundes des Patienten, vorgesehenen Bereich des Sockels 16 schlank und schmal zu halten. Durch die seitliche Verbreiterung des Vorsprungs der Grundplatte 18 im Griffbereich 22 ist dennoch die Standfestigkeit gegeben.

Es versteht sich, dass der Griffbereich 22 in beliebiger geeigneter Weise ausgebildet sein kann, beispielsweise auch rechteckig oder quadratisch, je mit abgerundeten Ecken. Auch ist es möglich, anstelle einer geschlossenen Griffplatte eine solche mit Durchbrechungen zu verwenden.

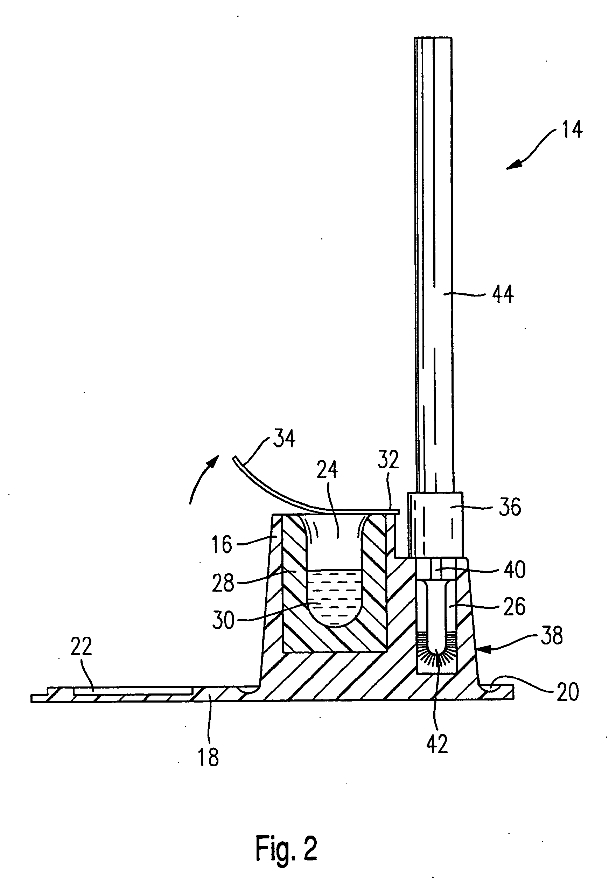

Erfindungsgemäß weist der Sockel 16 einen ersten Aufnahmebereich 24 und einen zweiten Aufnahmebereich 26 auf. Dies ist auch in Fig. 2 recht gut ersichtlich.

Der erste Aufnahmebereich 24 ist in einem Einsatz 28 vorgesehen. Der Einsatz 28 ist - wie aus Fig. 2 ersichtlich ist - bündig in den Sockel 16 eingesetzt. Er weist innen eine bauchige, recht tiefe Vertiefung auf, die erfindungsgemäß für die Aufnahme einer Flüssigkeit 30 bestimmt ist. Die Flüssigkeit 30 ist lediglich in der unteren Hälfte des ersten Aufnahmebereichs 24, der als bauchige Vertiefung ausgebildet ist, vorgesehen, während die obere Hälfte ungefüllt ist.

Der erste Aufnahmebereich 24 ist vor Gebrauch mit einer Abdeckfolie 32 dicht verschlossen. Die Abdeckfolie ist mit dem Einsatz in an sich bekannter Weise kreisringförmig verschweißt. Sie weist eine Greif-Lasche 34 auf, die sich zum Griffbereich 22 hin erstreckt und mit welcher die Abdeckfolie 32 abziehbar ist.

Der erste Aufnahmebereich 24 weist etwa den doppelten Durchmesser des zweiten Aufnahmebereichs 26 auf. Der zweite Aufnahmebereich 26 ist für das Einstecken des Applikationselements 14 bestimmt und hierzu geeignet ausgebildet. Er weist einen im Wesentlichen zylindrischen Querschnitt nach der Art eines Sacklochs auf. Er weist ein Höhen/Durchmesser-Verhältnis von etwa 4:1 auf, wobei es sich versteht, dass die genaue Ausgestaltung in weiten Bereichen an die Erfordernisse anpassbar ist. In dem dargestellten Ausführungsbeispiel weist das Applikationselement 14 zwischen einer Verdickung 36, die als Führungsbereich dient, und einem Arbeitsende 38 einen Hals 40 auf, der mit seinem Außendurchmesser genau bündig in den zweiten Aufnahmebereich 26 passt und dort zusammen mit der Verdickung 36 das obere Ende des zweiten Aufnahmebereichs 26 abdichtet.

Das Arbeitsende 38 ist mit einem Auftragelement 42 versehen, das in beliebiger geeigneter Weise ausgebildet sein kann. Beispielsweise kann es Bürsten, Borsten, eine Beflockung oder einen Schwamm aufweisen und ist bevorzugt mit einem Bestandteil der aufzubringenden Substanz beschichtet. Beim Eintauchen des Arbeitsendes 38 in die Flüssigkeit 30 erfolgt eine chemische Reaktion zwischen dem festen Bestandteil auf dem Arbeitsende 38 und der Flüssigkeit 30, die die erwünschte Substanz bereitstellt.

Das Applikationselement 14 ist in ergonomisch günstiger Weise, jedoch schlank gestaltet. Hierzu weist es einen Schaft 44 auf, der von Hand greifbar ist.

Bei der Anwendung der erfindungsgemäßen Applikationsvorrichtung 10 wird zunächst die Applikationsvorrichtung 10 auf einer Unterlage abgestellt. Der Sockel 16 wird dann zwischen zwei Fingern gehalten und durch Greifen der Lasche 34 die Abdeckfolie 32 abgezogen. Die Haltekraft des Einsatzes 28 in dem Sockel 16 ist so groß gewählt, dass der Einsatz beim Abziehen der Abdeckfolie 32 in dem Sockel verbleibt. Das Applikationselement 14 wird dann aus dem zweiten Aufnahmebereich 26 herausgezogen und in den ersten Aufnahmebereich 24 eingestellt. Die Abmessungen des Applikationselements 14 und des ersten Aufnahmebereichs 24 sind so gewählt, dass das Applikationselement 14 standfest auch in den ersten Aufnahmebereich 24 einstellbar ist. Hierzu ist es günstig, den ersten Aufnahmebereich 24 ebenfalls ausgesprochen schlank zu halten, also mit einem vergleichsweise großen Höhen/Durchmesser-Verhältnis. Alternativ ist es auch möglich, die Höhe des ersten Aufnahmebereichs 24 so zu wählen, dass es beim Einstecken des Applikationselements 14 der Bereich der Verdickung 36 seitlich anliegt, so dass das Applikationselement 14 seitlich gut abgestützt ist.

Bevorzugt in dieser Position wird nun die Applikationsvorrichtung durch Greifen des Griffbereichs 22 oder Schafts 44 zwischen Daumen und Zeigefinger beispielsweise der linken Hand gehalten und in die Nähe des Behandlungsortes, also des Mundes des Patienten, gebracht. Die nach Einwirken der Flüssigkeit 30 auf das Auftragselement 42 gebrauchsfertig gemischte Substanz kann dann durch Auftragen mittels des Applikationselements ergonomisch günstig und in unmittelbarer Nähe des Auftragorts aufgebracht werden.

Nach Gebrauch kann die Applikationsvorrichtung 10 wieder auf einer ebenen Unterlage abgestellt werden. Um Austrocknungen während der vorzeitigen Zwischenlagerung zu vermeiden, wird das Applikationselement 14 in den zweiten Aufnahmebereich 26 eingesteckt, wo es oben abgedichtet ist. Der erste Aufnahmebereich 24 lässt sich ebenfalls durch Herunterbiegen der Lasche 34 an der Abdeckfolie 32 abdecken. Es ist bevorzugt, hier eine recht dicke Aluminiumfolie zu verwenden, die nicht elastisch sein sollte, um ein Wiederverschließen leichter zu ermöglichen, also jedenfalls keine Verbundfolie. Alternativ, beispielsweise bei Verwendung einer im Verhältnis zur Materialstärke gut reißfesten Verbundfolie, kann auch ein Kleberand im Mündungsbereich des ersten Aufnahmebereichs 24 und diesen umgebend ausgebildet sein, der eine Zwischenabdichtung für eine kurzzeitige Zwischenlagerung ermöglicht.

In weiterer Ausgestaltung ist es vorgesehen, eine Schweißnaht zwischen der Abdeckfolie 32 und dem Einsatz 28 ringförmig vorzusehen, die von einer Klebenaht zwischen der Abdeckfolie 32 und dem Sockel 16 umgeben ist. Bei dieser Lösung ist sicher verhindert, dass während der Langzeitlagerung flüchtige Bestandteile der Klebenaht die Flüssigkeit 30 verunreinigen, aber ein Zwischenverschließen für die vorzeitige Aufbewahrung der erfindungsgemäßen Applikationsvorrichtung ist dennoch möglich.

## Patentansprüche

1. Applikationsvorrichtung zum Auftragen einer Substanz auf einem Applikationsort, mit einem Grundkörper (12) mit einem ersten Aufnahmebereich (24), in welchen eine Flüssigkeit aufnehmbar ist, und mit einem Applikationselement mit einem Auftragselement (42), das ein insbesondere mit einer Beschichtung versehnes Arbeitsende (38) aufweist, wobei ein zweiter Aufnahmebereich (26) zur Aufnahme des Arbeitsendes (38) neben dem ersten Aufnahmebereich (24) ausgebildet ist,
**dadurch gekennzeichnet, dass** der zweite Aufnahmebereich (26) in Form eines Ständers für die Aufnahme des das Arbeitsende (38) aufweisenden Bereiches des Auftragselements (42) ausgebildet ist.

2. Applikationsvorrichtung nach Anspruch 1,
**dadurch gekennzeichnet, dass** der Grundkörper (12) auch bei in den zweiten Aufnahmebereich (26) eingestecktem Arbeitselement auf einer Unterlage standfest ist.

3. Applikationsvorrichtung nach einem der vorhergehenden Ansprüche,
**dadurch gekennzeichnet, dass** die beiden Aufnahmebereiche (24, 26) voneinander beabstandet sind, und Mittellängsachsen aufweisen, die insbesondere im Wesentlichen zueinander parallel verlaufen.

4. Applikationsvorrichtung nach einem der vorhergehenden Ansprüche,
**dadurch gekennzeichnet, dass** der Grundkörper (12) einen Sockel (16) aufweist, in dem beide Aufnahmebereiche (24, 26) ausgebildet sind.

5. Applikationsvorrichtung nach Anspruch 4,
**dadurch gekennzeichnet, dass** wenigstens einer der Aufnahmebereiche (24, 26), insbesondere der erste Aufnahmebereich (24), in einem Einsatz (28) ausgebildet ist, der in dem Sockel (16) aufnehmbar ist.

6. Applikationsvorrichtung nach einem der vorhergehenden Ansprüche, insbesondere nach einem der Ansprüche 4 oder 5,
**dadurch gekennzeichnet, dass** der Grundkörper (12) eine Grundplatte (18) aufweist, die sich über den Sockel (16) in horizontaler Richtung deutlich hinaus erstreckt und insbesondere in einer Richtung einen Vorsprung bildet.

7. Applikationsvorrichtung nach Anspruch 6,
**dadurch gekennzeichnet, dass** der Vorsprung einen Griffbereich (22) bildet und insbesondere eine Vertiefung aufweist.

8. Applikationsvorrichtung nach einem der vorhergehenden Ansprüche, insbesondere nach einem der Ansprüche 4 bis 6,ach einem der Ansprüche 4 oder 5,
**dadurch gekennzeichnet, dass** im Übergangsbereich zwischen einem die Aufnahmebereiche (24, 26) aufnehmenden Sockel (16) des Grundkörpers (12) und der Grundplatte (18) des Grundkörpers (12) eine Flüssigkeitsauffangrinne (20) ausgebildet ist, die den Sockel (16) umgibt.

9. Applikationsvorrichtung nach einem der vorhergehenden Ansprüche,
**dadurch gekennzeichnet, dass** die Grundplatte (18) des Grundkörpers (12) eine Höhe von 1 bis 10 mm und der Sockel (16) des Grundkörpers (12) eine Höhe von 15 bis 60 mm aufweist.

10. Applikationsvorrichtung nach einem der vorhergehenden Ansprüche,
**dadurch gekennzeichnet, dass** Mündungsbereiche der beiden Aufnahmebereiche (24, 26) auf unterschiedlichen Höhenlagen, bezogen auf die Grundplatte (18) des Grundkörpers (12), ausgebildet sind.

11. Applikationsvorrichtung nach einem der vorhergehenden Ansprüche,
**dadurch gekennzeichnet, dass** der zweite Aufnahmebereich (24, 26) als im Wesentlichen zylindrisches Sackloch ausgebildet ist.

12. Applikationsvorrichtung nach einem der vorhergehenden Ansprüche,
**dadurch gekennzeichnet, dass** das Auftragselement (42) eine Verdickung (36) aufweist, die sich im Mündungsbereich des zweiten Aufnahmebereichs (26) auf einer von der Grundplatte (18) abgewandten Stirnseite des Sockels (16) abstützt.

13. Applikationsvorrichtung nach einem der vorhergehenden Ansprüche,
**dadurch gekennzeichnet, dass** der Mündungsbereich des zweiten Aufnahmebereichs (26) einen Durchmesser aufweist, der im Wesentlichen jenem Durchmesser des Auftragselements (42) entspricht, den das Auftragselement (42) in einem an die Verdickung (36) in Richtung Arbeitsende (38) anschließenden Bereich aufweist.

14. Applikationsvorrichtung nach einem der vorhergehenden Ansprüche,
**dadurch gekennzeichnet, dass** der erste Aufnahmebereich (24) sich zu seinem Mündungsbereich hin erweitert und insbesondere an seinem unteren Ende ausgerundet ist.

15. Applikationsvorrichtung nach einem der vorhergehenden Ansprüche,
**dadurch gekennzeichnet, dass** der erste Aufnahmebereich (24) ein Höhen/Durchmesserverhältnis von mehr als 1,5 zu 1, insbesondere etwa 2 zu 1 hat.

16. Applikationsvorrichtung nach einem der vorhergehenden Ansprüche, insbesondere nach einem der Ansprüche 4 oder 5,
**dadurch gekennzeichnet, dass** der erste Aufnahmebereich (24) von einer abziehbaren Abdeckfolie (32) verschlossen ist, deren Schweißnaht den Mündungsbereich des Aufnahmebereichs (24) umgibt und auf dem Sockel (16) und/oder dem Einsatz (28) des Grundkörpers (12) verläuft.

17. Applikationsvorrichtung nach Anspruch 16,
**dadurch gekennzeichnet, dass** die Abdeckfolie (32) als Aluminium-Verbundfolie ausgebildet ist und eine von Hand erfassbare Lasche (34) aufweist, die mindestens den Aufnahmebereich (24) und insbesondere einen Sockel (16) des Grundkörpers (12) seitlich überragt.

18. Applikationsvorrichtung nach Anspruch 1 zum manuellen Auftragen einer Masse aus zwei Komponenten, mit zwei benachbarten Aufnahmebereichen (24, 26) in einem gemeinsamen Grundkörper (12), wobei
der eine Aufnahmebereich (26) als Halter für ein Auftragselement (42) dient, an dessen auftragendem Ende (38) die erste Komponente haftet, und
der andere Aufnahmebereich (24) ein Behälter mit der zweiten Komponente ist, in den das Auftragselement eingetaucht werden kann.

## Claims

1. An applicator device for applying a substance to an application site, with a base member (12) with a first receptacle (24) which can receive a fluid, and with an applicator element with an applying element (42) which has an operative end (38) provided in particular with a coating, wherein a second receptacle (26) is formed to receive the operative end (38) close to the first receptacle (24), **characterised in that** the second receptacle (26) is in the form of a stand for receiving the zone of the applying element (42) having the operative end (38).

2. An applicator device according to Claim 1, **characterised in that**, even if an operating element is inserted into the second receptacle (26), the base member (12) is stable on a support.

3. An applicator device according to either one of the preceding Claims, **characterised in that** the two receptacles (24,26) are spaced apart and have central longitudinal axes which in particular extend substantially parallel to one another.

4. An applicator device according to any one of the preceding Claims, **characterised in that** the base member (12) has a socket (16) in which the two receptacles (24,26) are formed.

5. An applicator device according to Claim 4, **characterised in that** at least one of the receptacles (24,26), in particular the first receptacle (24), is formed in an insert (28) which can be accommodated in the socket (16).

6. An applicator device according to any one of the preceding Claims, in particular according to either Claim 4 or Claim 5, **characterised in that** the base member (12) has a base plate (18) which extends clearly beyond the socket (16) in a horizontal direction and, in particular, forms a projection in one direction.

7. An applicator device according to Claim 6, **characterised in that** the projection forms a grip portion (22) and, in particular, has a recess.

8. An applicator device according to any one of the preceding Claims, in particular according to any one of Claims 4 to 6, **characterised in that** a fluid-collecting channel (20), which surrounds the socket (16), is formed in the transition zone between a socket (16) of the base member (12) accommodating the receptacles (24,26) and the base plate (18) of the base member (12).

9. An applicator device according to any one of Claims, **characterised in that** the base plate (18) of the base member (12) has a height of 1 to 10 mm and the socket (16) of the base member (12) has a height of 15 to 60 mm.

10. An applicator device according to any one of Claims, **characterised in that** aperture zones of the two receptacles (24,26) are formed at different levels, in relation to the base plate (18) of the base member (12).

11. An applicator device according to any one of the preceding Claims, **characterised in that** the second receptacle (24,26) is in the form of a substantially cylindrical blind hole.

12. An applicator device according to any one of the preceding Claims, **characterised in that** the applying element (42) has a widened portion (36) which in the aperture zone of the second receptacle (26) is supported on an end face of the socket (16) remote from the base plate (18).

13. An applicator device according to any one of the preceding Claims, **characterised in that** the aperture zone of the second receptacle (26) is of a diameter which corresponds substantially to that diameter of the applying element (42) which the applying element (42) has in a zone adjacent the widened portion (36) towards the operative end (38).

14. An applicator device according to any one of the preceding Claims, **characterised in that** the first receptacle (24) widens towards the aperture zone and, in particular, is rounded at its lower end.

15. An applicator device according to any one of the preceding Claims, **characterised in that** the first receptacle (24) has a height/diameter ratio of more than 1.5 to 1, in particular approximately 2 to 1.

16. An applicator device according to any one of the preceding Claims, in particular according to either Claim 4 or Claim 5, **characterised in that** the first receptacle (24) is sealed by a removable cover foil (32), the weld seam of which surrounds the aperture zone of the receptacle (24) and extends on the socket (16) and/or on the insert (28) of the base member (12).

17. An applicator device according to Claim 16, **characterised in that** the cover foil (32) is in the form of aluminium multi-layer foil and has a tab (34) which can be gripped by hand and which protrudes laterally at least beyond the receptacle (24) and, in particularly, beyond a socket (16) of the base member (12).

18. An applicator device for the manual application of a compound comprising two components, with two adjacent receptacles (24,26) in a common base member (12), wherein one receptacle (26) serves as a holder for an applying element (42), the first component adhering to the applying end (38),
and the other receptacle (24) is a container with the second component, into which the applying element can be dipped.

## Revendications

1. Dispositif d'application pour l'enduction d'une substance sur un emplacement d'application, avec un corps de base (12) avec une première zone de réception (24) dans laquelle un liquide peut être reçu, et avec un élément d'application avec un élément d'enduction (42) qui comporte une extrémité de travail (38) munie, en particulier, d'un revêtement, une seconde zone de réception (26) étant formée à côté de la première zone de réception (24) pour la réception de l'extrémité de travail (38),
**caractérisé en ce que** la seconde zone de réception (26) est configurée sous forme d'un montant pour la réception de la zone de l'élément d'enduction (42) comportant l'extrémité de travail (38).

2. Dispositif d'application selon la revendication 1,
**caractérisé en ce que** le corps de base (12) est fixe sur un appui même lorsque l'élément de travail est inséré dans la seconde zone de réception (26).

3. Dispositif d'application selon l'une quelconque des revendications précédentes,
**caractérisé en ce que** les deux zones de réception (24, 26) sont espacées l'une de l'autre et présentent des axes médians longitudinaux qui s'étendent en particulier sensiblement parallèlement l'un par rapport à l'autre.

4. Dispositif d'application selon l'une quelconque des revendications précédentes,
**caractérisé en ce que** le corps de base (12) comporte un socle (16) dans lequel sont formées les deux zones de réception (24, 26).

5. Dispositif d'application selon la revendication 4,
**caractérisé en ce qu'**au moins l'une des zones de réception (24, 26), en particulier la première zone de réception (24), est formée dans une garniture (28) qui peut être logée dans le socle (16).

6. Dispositif d'application selon l'une quelconque des revendications précédentes, en particulier selon l'une quelconque des revendications 4 ou 5,
**caractérisé en ce que** le corps de base (12) comporte une plaque de base (18) qui s'étend nettement au-delà du socle (16) dans la direction longitudinale et qui forme, en particulier, une partie en saillie dans une direction.

7. Dispositif d'application selon la revendication 6,
**caractérisé en ce que** la partie en saillie forme une zone de prise (22) et, en particulier, **en ce qu'**elle comporte une cavité.

8. Dispositif d'application selon l'une quelconque des revendications précédentes, en particulier selon l'une quelconque des revendications 4 à 6, selon l'une quelconque des revendications 4 ou 5,
**caractérisé en ce que**, dans la zone de transition entre un socle (16) du corps de base (12) recevant les zones de réception (24, 26) et la plaque de base (18) du corps de base (12), est formée une goulotte collectrice de liquide (20) qui entoure le socle (16).

9. Dispositif d'application selon l'une quelconque des revendications précédentes,
**caractérisé en ce que** la plaque de base (18) du corps de base (12) présente une hauteur comprise entre 1 mm et 10 mm et le socle (16) du corps de base (12) présente une hauteur comprise entre 15 mm et 60 mm.

10. Dispositif d'application selon l'une quelconque des revendications précédentes,
**caractérisé en ce que** des zones d'embouchure des deux zones de réception (24, 26) sont formées à des hauteurs différentes par rapport à la plaque de base (18) du corps de base (12).

11. Dispositif d'application selon l'une quelconque des revendications précédentes,
**caractérisé en ce que** la seconde zone de réception (24, 26) est formée comme un trou borgne sensiblement cylindrique.

12. Dispositif d'application selon l'une quelconque des revendications précédentes,
**caractérisé en ce que** l'élément d'enduction (42) présente un épaississement (36) qui s'appuie sur une face frontale du socle (16) opposée à la plaque de base (18) dans la zone d'embouchure de la seconde zone de réception (26).

13. Dispositif d'application selon l'une quelconque des revendications précédentes,
**caractérisé en ce que** la zone d'embouchure de la seconde zone de réception (26) présente un diamètre qui correspond sensiblement au diamètre de l'élément d'enduction (42) que l'élément d'enduction (42) présente dans une zone raccordée à l'épaississement (36) dans la direction de l'extrémité de travail (38).

14. Dispositif d'application selon l'une quelconque des revendications précédentes,
**caractérisé en ce que** la première zone de réception (24) s'élargit en direction d'une zone d'embouchure et, en particulier, **en ce qu'**elle est arrondie à son extrémité inférieure.

15. Dispositif d'application selon l'une quelconque des revendications précédentes,
**caractérisé en ce que** la première zone de réception (24) présente un rapport hauteur/diamètre de plus de 1,5 à 1, en particulier d'environ 2 à 1.

16. Dispositif d'application selon l'une quelconque des revendications précédentes, en particulier selon l'une quelconque des revendications 4 ou 5,
**caractérisé en ce que** la première zone de réception (24) est obturée par un film protecteur pelable (32) dont le cordon de soudure entoure la zone d'embouchure de la zone de réception (24) et s'étend sur le socle (16) et/ou sur la garniture (28) du corps de base (12).

17. Dispositif d'application selon la revendication 16,
**caractérisé en ce que** le film protecteur (32) est réalisé sous forme d'un film composite en aluminium et comporte une attache (34) empoignable manuellement qui déborde latéralement au moins au-dessus de la zone de réception (24) et, en particulier, d'un socle (16) du corps de base (12).

18. Dispositif d'application selon la revendication 1 pour l'enduction manuelle d'une masse constituée de deux composants, avec deux zones de réception voisines (24, 26) dans corps de base commun (12), une zone de réception (26) servant d'appui pour un élément d'enduction (42) à l'extrémité d'application (38) duquel adhère le premier composant, et
l'autre zone de réception (24) étant un récipient avec le second composant dans lequel l'élément d'enduction peut être plongé.
